# EUROPEAN PATENT APPLICATION

(11) **EP 4 703 929 A1**
(43) Date of publication of application: **04.03.2026**
(21) Application number: 24197064.9
(22) Date of filing: 28.08.2024
(51) Int. Cl.: G06F 21/57, G06F 21/64

(54) **METHOD FOR CREATING A BACKUP OF A DEVICE AND METHOD FOR INSTALLING A BACKUP OF A DEVICE AND BACKUP MANAGEMENT SYSTEM**

(71) Applicant: Siemens Aktiengesellschaft, 80333 München (DE)
(72) Inventor: Falk, Rainer, 85435 Erding (DE); Feist, Christian Peter, 80689 München (DE); Hornung, Peter, 91054 Erlangen (DE); Kumari, Ankita, 81549 München (DE); Mantel, Martin, 91325 Adelsdorf (DE); Piccoli, Alessandro, 80333 München (DE); Pyka, Stefan, 85570 Markt Schwaben (DE); Sperl, Franz, 92526 Oberviechtach (DE); Zeschg, Thomas, 81543 München (DE)
(74) Representative: Siemens Patent Attorneys

(57) **Abstract**

The present invention provides a method for creating a backup of a device. The method includes attesting device status information with an attestation and creating a backup image of the device. The backup image is linked to the attested device status information. The method further includes sending the attestation to a backup management system configured to assess the device status information and compare it with the attested device status information. The device status information may include device identification, environment information, hardware properties, software versions, security features, and timestamps. The backup image is linked to the device status information using a fingerprint or digital signature. The disclosure also provides a backup management system configured to determine current device status information, consider the attestation, and install the backup if the current and attested device status information comply with each other.

## Description

The invention related to a method for creating a backup of a device and to a method for installing a backup of a device and to a backup management system.

Industrial production plants rely heavily on the continuous operation of their devices and components to minimize downtime and maintain productivity. A critical aspect of ensuring this continuity is the ability to quickly replace defective devices or components when failures occur. This process necessitates having reliable backup systems in place to store and restore firmware, software, configurations, cryptographic credentials, and user data for all components and devices within a factory setting.

The backup management process for industrial devices presents unique challenges. On one hand, there is a need for high availability to enable rapid recovery after a device failure. On the other hand, the integrity and confidentiality of backup images must be protected, as they often contain sensitive information such as proprietary know-how, trained AI models, cryptographic credentials, confidential user data, or log files.

Ensuring the security of backup processes is crucial not only to prevent targeted attacks but also to avoid accidental storage or installation of backup images on incompatible or vulnerable devices. This is particularly important in industrial settings where the consequences of downtime or data leakage can be severe.

Traditional backup systems often focus primarily on data preservation and recovery speed, without necessarily incorporating robust security measures to verify the integrity and trustworthiness of the devices involved in the backup and restoration processes. As industrial systems become increasingly interconnected and complex, there is a growing need for more sophisticated backup management solutions that can address these security concerns while maintaining the efficiency and reliability required in industrial environments.

Improving the security of backup operations for industrial devices and components presents several challenges. These include verifying the state and integrity of devices during backup creation and restoration, ensuring compatibility between backup images and target devices, and protecting against unauthorized access or manipulation of sensitive data contained within backup images.

Thus, the present invention aims at providing an improved method for creating a backup of a device and at providing an improved method for installing a backup of a device. Furthermore, the present invention aims at providing an improved backup management system.

These aims of the invention are solved with a method for creating a backup of a device comprising the features according to claim 1 and with a method for installing a backup of a device comprising the features listed in claim 2 and with a backup management system with the features contained in claim 8.

Advantageous aspects of the invention are contained in the respective dependent claims, the subsequent description and the drawing.

According to the invention, a method for creating a backup of a device is provided. The method includes attesting a device status information with an attestation, creating a backup image of the device, and linking the backup image to the device status information. This method advantageously enhances the security and reliability of the backup process by ensuring that the device status is verified and associated with the backup image.

Alternatively, and also according to the invention, a method for installing a backup of a device is provided. The method includes considering a backup image that is linked to an attested device status information of the device, subjecting the attested device status information to a comparison of the current device status and the device status information, and installing the backup image on the device when the current device status and the device status information comply with each other. This approach may help prevent installation of incompatible or potentially compromised backups, thereby improving system integrity and security.

It is understood, that a backup that is created and/or installed comprises at least a backup image that is created and/or installed.

According to further advantageous aspects of the present invention, the method may include one or more of the following features:
In the method according to the invention, the current device status information is advantageously determined after installing the backup and compared with the attested device status information. This post-installation verification may provide an additional layer of security and ensure that the device remains in a known, trusted state after the backup is installed.

In an advantageous aspect of the method according to the invention, the device status information includes one or more of the following data: a device identification information, a device environment information, information about hardware properties and/or capabilities, a hardware bill of materials, software and/or firmware version and state, a runtime health check report, security-related features, and a timestamp. This comprehensive set of status information advantageously allows for more accurate and detailed device verification, potentially reducing the risk of compatibility issues or security vulnerabilities.

In an advantageous aspect of the method according to the invention, the backup image of the device is preferably linked to the device status information using a fingerprint, particularly a hash value, of the backup together with the device status information. Alternatively, or additionally, and advantageously, the backup image of the device is linked to the device status information using a digital signature of the backup image or a fingerprint of the backup image together with the device status information. These linking methods advantageously provide a secure and tamper-evident way to associate the backup image with its corresponding device status information.

According to another preferred aspect of the present invention, the method includes sending the attestation to a backup management system that is configured to assess a device status information of a device and which is further configured to compare the device status information of the device and the device status information attested with the attestation. This centralized management approach may allow for more consistent and efficient handling of backups across multiple devices.

Additionally, a backup management system according to the invention is provided. The backup management system is configured to carry out a method for installing a backup of a device. The backup management system is in particular configured to determine the current device status information of the device and to consider an attestation of the device. The backup management system is configured to conduct a comparison of the current device status information with the attested device status information. The backup is installed in case the current device status information and the attested device status information comply with each other and not installed in case the current device status information and the attested device status information do not comply with each other. This system thus provides a centralized and automated way to manage backups while ensuring compatibility and security.

The backup management system, in an advantageous aspect of the present invention, preferably contains device status attestation policies that define when a current device status information and an attested device status information comply. These policies accordingly allow for flexible and customizable criteria for determining device compatibility and trustworthiness.

The backup management system, in a further advantageous aspect of the present invention, is preferably configured to determine the current device status information after installing the backup and is preferably configured to conduct a comparison of the current device status information and the attested device status information. The device advantageously may be shutdown or limited in its functionality dependent on whether the current device status and the attested device status information comply. This post-installation verification and potential remediation advantageously provide an additional layer of security and help maintain system integrity.

These preferred aspects of the present invention offer several advantages, including enhanced security in backup creation and restoration processes, improved compatibility verification between backup images and target devices, and centralized management of backup operations. The methods and systems described above may help to address the challenges of maintaining both high availability and strong security in industrial environments, potentially reducing downtime and mitigating risks associated with data breaches or system compromises.

Particularly in the context of industrial production plants, the continuous operation of devices and components is crucial to minimize downtime and maintain productivity. A key aspect of ensuring this continuity is the ability to quickly replace defective devices or components when failures occur. This necessitates having robust backup systems in place to store and restore firmware, software, configurations, cryptographic credentials, and user data for all components and devices within a factory setting.

However, the backup management process for industrial devices presents unique challenges. On one hand, there is a need for high availability to enable rapid recovery after a device failure. On the other hand, the integrity and confidentiality of backup images must be protected, as they often contain sensitive information such as proprietary know-how, trained AI models, cryptographic credentials, confidential user data, or log files. Ensuring the security of backup processes is crucial not only to prevent targeted attacks but also to avoid accidental storage or installation of backup images on incompatible or vulnerable devices.

To address these challenges, the present invention provides methods and systems that leverage remote attestation to enhance the security and reliability of backup creation and restoration processes. Remote attestation allows for the verification of a device's state and integrity at the time of backup creation or restoration, ensuring compatibility between backup images and target devices, and protecting against unauthorized access or manipulation of sensitive data contained within backup images. In some aspects, the methods and systems described herein may also provide centralized management of backup operations, further enhancing efficiency and security in industrial environments.

The foregoing general description of the illustrative embodiments and the following detailed description thereof are merely exemplary aspects of the teachings of this disclosure and are not restrictive.

In the following, the invention is described in more detail with the help of the accompanying drawings.
Fig. 1 illustrates a system for creating backups with enhanced security features, according to aspects of the present invention in a schematic diagram.
Fig. 2 depicts a system for restoring backups with enhanced security features, according to an embodiment schematically in a basic sketch.
Fig. 3 shows a system diagram for creating a backup of an industrial device, in accordance with example embodiments, in a schematic diagram.

The following description sets forth exemplary aspects of the present invention. It should be recognized, however, that such description is not intended as a limitation on the scope of the present invention. Rather, the description also encompasses combinations and modifications to those exemplary aspects described herein.

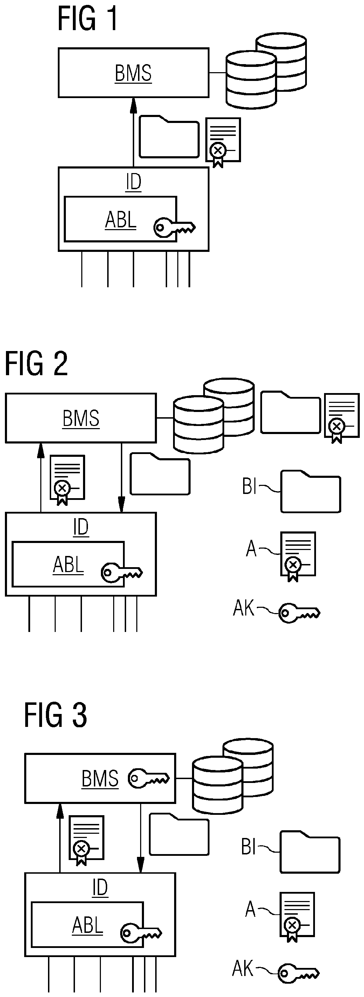

As depicted in Figs. 1-2, a system for creating and restoring backups with enhanced security features is depicted. The system includes an Industrial Device ID and a Backup Management System BMS. In some aspects, the Industrial Device ID may be any type of industrial component or device, such as a production machine, a sensor, a controller, or a network device. The Backup Management System BMS may be a centralized system or a distributed system that manages the backup operations for multiple Industrial devices IDs within an industrial environment.

In the process of creating a backup, as shown in Fig. 1, the Industrial Device ID generates a Backup Image BI of its current state. The Backup Image BI may include various types of data, such as firmware, software, configuration settings, cryptographic credentials, and user data. In some cases, the Backup Image BI may also include sensitive information, such as proprietary know-how or trained Al models.

Simultaneously with the creation of the Backup Image BI, the Industrial Device ID generates an Attestation A using an Attestation Key AK. The Attestation A may include various types of device status information, such as device identification, environment information, hardware properties, software or firmware version and state, runtime health check report, security-related features, and a timestamp. The Attestation A is signed by the Attestation Key AK, providing a reliable and secure way to verify the integrity and authenticity of the device status information. The Backup Image BI and the Attestation A are then sent to the Backup Management System BMS. In some cases, the Backup Image BI and the Attestation A may be sent separately, while in other cases, they may be sent together as a single package. Upon receiving the Backup Image BI and the Attestation A, the Backup Management System BMS stores them in a database. The Backup Management System BMS may also verify the Attestation A against predefined policies to ensure that the Industrial Device ID was in an expected and trusted state when the Backup Image BI was created. If the Attesation A does not match the expected values, the Backup Management System BMS may refuse the Backup Image BI or tag it with a warning.

In the process of restoring a backup, as shown in Fig. 2, the Backup Management System BMS first requests an Attestation A from the Industrial Device ID. The Industrial Device ID generates a new Attestation A, which reflects its current state, and sends it to the Backup Management System BMS. The Backup Management System BMS then verifies this new Attestation A against the stored Attestation A from the backup creation. If the new Attestation A matches the stored Attestation A, indicating that the Industrial Device ID is in a compatible and trusted state, the Backup Management System BMS sends the Backup Image BI to the Industrial Device ID for restoration. If the new Attestation A does not match the stored Attestation A, the Backup Management System BMS may refuse to send the Backup Image BI, preventing the restoration of the backup on an incompatible or untrusted device.

In the depicted embodiment, the system optionally includes additional security features, such as encryption of the Backup Image BI and the Attestation A during transmission, or the use of hardware-based security mechanisms, such as a Trusted Platform Module TPM, for generating the Attestation A. These features further enhance the security and reliability of the backup creation and restoration processes.

Referring to Figs. 1-2, the backup restoration process is also depicted. In the depicted embodiment, the Backup Management System BMS may request an Attestation A from the Industrial Device ID before initiating the restoration process. The Industrial Device ID generates this Attestation A, which reflects its current state, and sends it to the Backup Management System BMS. The Backup Management System BMS then verifies this new Attestation A against the stored Attestation A from the backup creation. This verification process may involve comparing the device status information contained in the new Attestation A with the attested device status information associated with the Backup Image Bl.

In some aspects, the Backup Management System BMS may be configured to assess the device status information of the Industrial Device ID and compare it with the attested device status information. This comparison may involve checking whether the current device status and the attested device status information comply with each other. If the new Attestation A matches the stored Attestation A, indicating that the Industrial Device ID is in a compatible and trusted state, the Backup Management System sends the Backup Image BI to the Industrial Device ID for restoration. If the new Attestation A does not match the stored Attestation A, the Backup Management System may refuse to send the Backup Image Bl, preventing the restoration of the backup on an incompatible or untrusted device.

In some cases, the Backup Management System may determine the current device status information of the Industrial Device ID after installing the backup. This post-installation check may involve generating another Attestation A that reflects the state of the Industrial Device ID after the backup has been installed. The Backup Management System may then compare this post-installation Attestation A with the stored Attestation A from the backup creation. This comparison may serve to verify that the Industrial Device ID is in the exact same state as when the backup image was created. If there is a mismatch between the post-installation Attestation A and the stored Attestation A, the Backup Management System BMS may take appropriate actions based on predefined policies. For instance, the mismatch could be accepted, the device could be completely blocked, or it could be temporarily blocked until the mismatch is corrected by a further restore.

These mechanisms provide an additional layer of security and robustness to the backup restoration process, ensuring that the backup is only restored on a device that is in a trusted and compatible state. This approach helps to prevent the installation of backup images on incompatible or vulnerable devices, thereby reducing the risk of system failures or data breaches.

Referring to Figs. 1-2, the Backup Management System BMS plays a crucial role in the backup creation and restoration processes. In some aspects, the Backup Management System may be configured to assess the device status information of the Industrial Device ID. This assessment may involve analyzing the Attestation A received from the Industrial Device ID, which contains various types of device status information. The Backup Management System may use this information to determine the current state of the Industrial Device ID, including its hardware and software configuration, security features, and operational status.

In some cases, the Backup Management System may also be configured to compare the device status information of the Industrial Device ID with the device status information attested with the Attestation A. This comparison may involve checking whether the current device status and the attested device status information comply with each other. If the two sets of information match, indicating that the Industrial Device ID is in a compatible and trusted state, the Backup Management System may proceed with the backup operation. If the two sets of information do not match, the Backup Management System may refuse to perform the backup operation, thereby preventing the creation or restoration of a backup on an incompatible or untrusted device.

In some aspects, the Backup Management System may be configured to carry out a method for installing a backup of a device. This method may involve receiving a Backup Image BI and an Attestation A from the Industrial Device ID, verifying the Attestation A against predefined policies, and sending the Backup Image BI back to the Industrial Device ID for restoration if the Attestation A is verified. The Backup Management System may also be configured to determine the current device status information of the Industrial Device ID after installing the backup. This post-installation check may involve generating another Attestation A that reflects the state of the Industrial Device ID after the backup has been installed. The Backup Management System may then compare this post-installation Attestation A with the stored Attestation A from the backup creation, ensuring that the Industrial Device ID is in the exact same state as when the backup image was created.

These capabilities of the Backup Management System provide an additional layer of security and robustness to the backup creation and restoration processes. By verifying the state of the Industrial Device ID before and after backup operations, the Backup Management System can ensure that backups are only created and restored on devices that are in a trusted and compatible state. This approach helps to prevent the installation of backup images on incompatible or vulnerable devices, thereby reducing the risk of system failures or data breaches.

Referring to Figs. 1-2, the Backup Management System BMS is configured to consider an attestation A of the Industrial Device ID during the backup restoration process. In some aspects, the Backup Management System may request an Attestation A from the Industrial Device ID before initiating the restoration process. The Industrial Device ID generates this A, which reflects its current state, and sends it to the Backup Management System. The Backup Management System then verifies this new Attestation A against the stored Attestation A from the backup creation. This verification process may involve comparing the device status information contained in the new Attestation A with the attested device status information associated with the Backup Image Bl.

In some cases, the Backup Management System may be configured to conduct a comparison of the current device status information with the attested device status information. This comparison may involve checking whether the current device status and the attested device status information comply with each other. If the new Attestation A matches the stored A, indicating that the Industrial Device ID is in a compatible and trusted state, the Backup Management System sends the Backup Image BI to the Industrial Device ID for restoration. If the new Attestation A does not match the stored A, the Backup Management System may refuse to send the Backup Image Bl, preventing the restoration of the backup on an incompatible or untrusted device.

In some aspects, the Backup Management System may be configured to determine the current device status information of the Industrial Device ID after installing the backup. This post-installation check may involve generating another Attestation A that reflects the state of the Industrial Device ID after the backup has been installed. The Backup Management System may then compare this post-installation Attestation A with the stored Attestation A from the backup creation. This comparison may serve to verify that the Industrial Device ID is in the exact same state as when the backup image was created. If there is a mismatch between the post-installation Attestation A and the stored A, the Backup Management System may take appropriate actions based on predefined policies. For instance, the mismatch could be accepted, the device could be completely blocked, or it could be temporarily blocked until the mismatch is corrected by a further restore.

These mechanisms provide an additional layer of security and robustness to the backup restoration process, ensuring that the backup is only restored on a device that is in a trusted and compatible state. This approach helps to prevent the installation of backup images on incompatible or vulnerable devices, thereby reducing the risk of system failures or data breaches.

Referring to Figs. 1-2, the Backup Management System BMS may be configured to conduct a comparison of the current device status information with the attested device status information after installing the backup. In some cases, the Backup Management System may determine the current device status information of the D after the backup has been installed. This post-installation check may involve generating another Attestation A that reflects the state of the Industrial Device ID after the backup has been installed. The Backup Management System may then compare this post-installation Attestation A with the stored Attestation A from the backup creation. This comparison may serve to verify that the Industrial Device ID is in the exact same state as when the backup image was created. If there is a mismatch between the post-installation Attestation A and the stored A, the Backup Management System may take appropriate actions based on predefined policies. For instance, the mismatch could be accepted, the device could be completely blocked, or it could be temporarily blocked until the mismatch is corrected by a further restore.

In some aspects, the Backup Management System may determine a trustworthiness indication of the Backup Image BI based on the provided A. This trustworthiness indication can be determined when the Backup Image BI is stored, when it is to be restored, or independently of a storage or restoration procedure. Depending on the trustworthiness indication, the Backup Image BI may be enabled for automated restore. It is also possible that a Backup Image BI of a set or series of backup images is selected for restore depending on the respective backup images. Furthermore, it is possible to select a Backup Image BI for deletion (to free memory space) depending on the trustworthiness indication.

In some cases, the Backup Management System may restrict the installation of a Backup Image BI to a specific set of devices or to devices meeting specific minimal hardware requirements. For instance, the installation of a Backup Image BI can be restricted to the Industrial Device ID on which the Backup Image BI was created, or a specific set of devices (e.g., product series), or to open compute devices meeting specific minimal hardware requirements (e.g., providing Trusted Execution Environment). Furthermore, the installation of a Backup Image BI can be restricted depending on the trustworthiness indication of the Backup Image BI that has been determined based on the Attestation A of the Industrial Device ID providing the Backup Image BI to the Backup Management System. This approach helps to prevent the installation of backup images on incompatible or vulnerable devices, thereby reducing the risk of system failures or data breaches.

Referring to Fig. 3, the system diagram for creating a backup of an industrial device is depicted. The system comprises a Backup Management System BMS and an Industrial Device ID. The Backup Management System includes a storage component represented by cylindrical database icons. The Industrial Device ID contains an Attestation Block ABL. The diagram shows the interaction between these components during the backup creation process.

In some aspects, the Industrial Device ID may be any type of industrial component or device, such as a production machine, a sensor, a controller, or a network device. The Industrial Device ID contains an Attestation Block ABL, which is responsible for generating an Attestation (A) during the backup creation process. The Attestation Block ABL may interact with various components or processes within the Industrial Device ID to collect device status information. This information is then incorporated into the A, providing a reliable and secure way to verify the integrity and authenticity of the device status information.

The device status information collected by the Attestation Block ABL may include various types of data. In some cases, the device status information may include device identification information, such as a serial number and/or a device certificate. This information can be used to uniquely identify the Industrial Device ID and verify its authenticity. In some aspects, the device status information may also include device environment information, such as network information and/or a domain certificate. This information can provide context about the environment in which the Industrial Device ID is deployed, which may be useful for assessing the security and integrity of the Industrial Device ID.

In some cases, the device status information may include information about hardware properties and/or capabilities of the Industrial Device ID. This may include information about hardware extension modules, such as IO modules or technology modules. This information can provide insight into the hardware capabilities of the Industrial Device ID, which may be important for ensuring compatibility between the Industrial Device ID and the backup image.

In some aspects, the device status information may include a hardware bill of materials. This can provide a detailed list of the hardware components used in the Industrial Device ID, which may be useful for assessing the integrity and compatibility of the Industrial Device ID. In some cases, the device status information may also include software and/or firmware version and state. This information can provide insight into the software and firmware running on the Industrial Device ID, which may be important for ensuring compatibility between the Industrial Device ID and the backup image.

In some aspects, the Attestation Block ABL may generate the Attestation A using an Attestation Key AK. The Attestation A may include the collected device status information, which is signed by the Attestation Key AK. This provides a reliable and secure way to verify the integrity and authenticity of the device status information. The Attestation A may then be sent to the Backup Management System along with the backup image during the backup creation process. The Backup Management System may store the Attestation A and the backup image in its storage component for later use during the backup restoration process.

Referring to Fig. 3, the Attestation Block ABL within the Industrial Device ID may gather various types of device status information to generate the Attestation A. In some cases, the device status information may include a runtime health check report. This report may provide real-time data about the operational status of the Industrial Device ID, such as its current performance, error rates, or uptime. This information can be useful for assessing the health and reliability of the Industrial Device ID at the time of backup creation.

In some aspects, the device status information may also include security-related features of the Industrial Device ID. These features may include a hardware credential store, a Trusted Execution Environment, information about whether Secure Boot is enabled, and/or whether Total/Transparent Memory Encryption is enabled. These security-related features can provide insight into the security posture of the Industrial Device ID, which may be important for ensuring the integrity and confidentiality of the backup image.

In some cases, the device status information may include a timestamp. The timestamp may indicate the exact time when the backup image was created. This can be useful for tracking the history of backup operations and for identifying the most recent backup image in case of a device failure.

In some aspects, the Attestation Block ABL may link the Backup Image BI to the device status information using a fingerprint, particularly a hash value, of the backup together with the device status information. The fingerprint may be a unique identifier generated by applying a hash function to the data in the Backup Image Bl. By linking the BI to the device status information in this way, the Attestation Block ABL can ensure that the Backup Image BI and the device status information are tightly coupled and can be verified together during the backup restoration process.

In some cases, the Attestation Block ABL may link the Backup Image BI to the device status information using a digital signature of the Backup Image BI or a fingerprint of the Backup Image BI together with the device status information. The digital signature may be generated by applying a cryptographic algorithm to the data in the Backup Image BI using the Attestation Key AK. This provides an additional layer of security, as the digital signature can be used to verify the integrity and authenticity of the Backup Image BI during the backup restoration process.

These mechanisms provide an additional layer of security and robustness to the backup creation process, ensuring that the backup image is tightly coupled with the device status information and that both can be verified together during the backup restoration process. This approach helps to prevent the creation of backup images on incompatible or vulnerable devices, thereby reducing the risk of system failures or data breaches.

Referring to Fig. 3, the Backup Management System BMS plays a crucial role in the backup creation and restoration processes. In some aspects, the Backup Management System may contain device status attestation policies that define when a current device status information and an attested device status information comply. These policies may be predefined and stored in the Backup Management System, and they may be used to guide the verification of Attestations A received from the Industrial Device ID. The policies may specify the expected values or ranges for various types of device status information, such as device identification, environment information, hardware properties, software or firmware version and state, runtime health check report, security-related features, and a timestamp. If the device status information contained in the Attestation A matches the expected values or ranges defined by the policies, the Backup Management System may consider the Attestation A as valid and proceed with the backup operation. If the device status information does not match the expected values or ranges, the Backup Management System may refuse the Attestation A and prevent the backup operation from proceeding.

In some cases, the Backup Management System may be configured to assess the device status information of the Industrial Device ID and compare it with the attested device status information. This comparison may involve checking whether the current device status and the attested device status information comply with each other. If the two sets of information match, indicating that the Industrial Device ID is in a compatible and trusted state, the Backup Management System may proceed with the backup operation. If the two sets of information do not match, the Backup Management System may refuse to perform the backup operation, thereby preventing the creation or restoration of a backup on an incompatible or untrusted device.

In some aspects, the Industrial Device ID may verify the integrity attestation of the Backup Management System before sending a backup image or restoring a received backup image. This verification process may involve the Industrial Device ID requesting an Attestation A from the Backup Management System, which reflects the current state of the Backup Management System. The Industrial Device ID then compares this Attestation A with a stored Attestation A from a previous interaction with the Backup Management System. If the two Attestations A match, indicating that the Backup Management System is in a trusted state, the Industrial Device ID may proceed with the backup operation. If the two As do not match, the Industrial Device ID may refuse to perform the backup operation, thereby preventing the creation or restoration of a backup on a compromised Backup Management System. This approach provides an additional layer of security by ensuring that the Backup Management System is in a trusted state before engaging in backup operations.

In additional embodiments, the Industrial Device ID may be configured to record the installation of a Backup Image BI by extending a dedicated Trusted Platform Module TPM Platform Configuration Register PCR. The Trusted Platform Module TPM Platform Configuration Register PCR is a hardware-based security feature that provides a secure and tamper-proof way to record and verify the installation process. When the Backup Image BI is installed on the Industrial Device ID, the Industrial Device ID may calculate a cryptographic checksum of the installed Backup Image BI and extend a dedicated Platform Configuration Register with this value. This process effectively records the installation of the Backup Image BI in a secure and verifiable manner.

In some cases, the Industrial Device ID may subsequently attest whether the expected Backup Image BI has been installed, before issuing a reboot of the device. This attestation process may involve generating an Attestation A that includes the value of the dedicated Platform Configuration Register. The Attestation A is then sent to the Backup Management System, which verifies the Attestation A against the stored Attestation A from the backup creation. If the Attestation A from the installation process matches the stored A, indicating that the expected Backup Image BI has been installed correctly, the Backup Management System may authorize the reboot of the Industrial Device ID. If the Attestation A does not match the stored A, the Backup Management System may refuse the reboot, thereby preventing the Industrial Device ID from booting with an incorrectly installed Backup Image Bl.

These mechanisms provide an additional layer of security and robustness to the backup installation process, ensuring that the Backup Image BI is correctly installed on the Industrial Device ID and that the installation process is securely recorded and verifiable. This approach helps to prevent the installation of incorrect or tampered Backup Image Bls, thereby reducing the risk of system failures or data breaches.

A number of implementations have been described. Nevertheless, it will be understood that various modifications may be made without departing from the spirit and scope of the disclosure. Accordingly, other implementations are within the scope of the following claims.

## Claims

1. Method for creating a backup of a device (ID), in which a device status information is attested with an attestation (A) and in which a Backup image (Bl) of the device (ID) is created and linked to the device status (ID) information.

2. Method for installing a backup of a device (ID), in which a backup image (Bl) is considered that is linked to an attested device status information of the device (ID) and in which the attested device status information is subject to a comparison of the current device (ID) status and the device (ID) status information and in which the backup image (BI) is installed on the device (ID) when the current device status and the device status information comply with each other.

3. Method according to claim 2, in which the current device status information is determined after installing the backup and compared with the attested device (ID) status information and compared determined after installing the device backup and compared

4. Method according to one of the preceding claims, wherein the device status information includes one or more of the following data:
- a device identification information, in particular a serial number and/or a device certificate,
- a device environment information, in particular a network information and/or a domaincertificate,
- information about hardware properties and/or capabilities, particularly hardware extension modules, preferably IO modules or technology modules,
- a hardware bill of materials,
- software and/or firmware version and state,
- a runtime health check report,
- security-related features, particularly a hardware credential store and/or a Trusted Execution Environment and/or information about Secure Boot enabled and/or Total/Transparent Memory Encryption enabled,
- a Timestamp

5. Method according to one of the preceding claims, wherein the backup image (Bl) of the device (ID) is linked to the device status information using a fingerprint, particularly a hash value, of the backup image (BI) together with the device status information.

6. Method according to one of the preceding claims, wherein the backup image of the device is linked to the device status information using a digital signature of the backup image or a fingerprint of the backup image (BI) together with the device status information.

7. Method for creating a backup according to one of the preceding claims, in which the attestation is sent to a backup management system, that is configured to assess a device status information of a device (ID) and which is further configured to compare the device status information of the device (ID) and the device status information attested with the attestation (A).

8. Backup management system, which is configured to carry out a method according to claim 2 for a device (ID) and which is in particular configured to determine the current device status information of the device (ID) and to consider an attestation (A) of the device (ID) and which is configured to conduct a comparison of the current device status information with the attested device status information and in which the backup is installed in case the current device status information and the attested device (ID) status information comply with each other and not installed in case the current device status information and the attested device (ID) status information do not comply with each other.

9. Backup management system according to the previous claim, that contains device (ID) status attestation policies that define when a current device status information and an attested device status information comply.

10. Backup management system according to one of the previous claims, which is configured to determine the current device (ID) status information after installing the backup and which is configured to conduct a comparison of the current device (ID) status information and the attested device (ID) status information and in which the device is shutdown or limited in its functionality dependent on whether the current device status and the attested device status information comply.
